# EUROPEAN PATENT SPECIFICATION

(11) **EP 3 292 338 B1**
(45) Date of publication and mention of the grant of the patent: **04.09.2019**
(21) Application number: 16721046.7
(22) Date of filing: 29.04.2016
(51) Int. Cl.: F16L 17/035, F16L 37/32, F16L 37/56, F16L 1/26, F16L 37/40

(54) **AXIAL METAL SEAL RETAINER AND SEALING MEMBER FOR IMPROVED FATIGUE RESISTANCE**
AXIALER METALLDICHTUNGSHALTER UND DICHTKÖRPER FÜR EINE VERBESSERTE ERMÜDUNGSBESTÄNDIGKEIT
DISPOSITIF AXIAL DE RETENUE DE JOINT MÉTALLIQUE ET ÉLÉMENT D'ÉTAINCHÉITÉ POUR UNE MEILLEURE RÉSISTANCE À LA FATIGUE

(30) Priority: 04.05.2015 US 201562156397 P
(43) Date of publication of application: 14.03.2018
(73) Proprietor: Parker-Hannifin Corporation, Cleveland, Ohio 44124-4141 (US)
(72) Inventor: KOLLER, Jason Richard, Eden Prairie, Minnesota 55344 (US)
(74) Representative: Orr, Robert
(86) International application number: PCT/US2016/029964
(87) International publication number: WO 2016/178950

(56) References cited:
- GB-A- 264 524
- US-A- 4 298 206
- US-A1- 2004 084 902
- US-A1- 2005 082 832
- US-B1- 6 663 144

## Description

### Technical Field

The present disclosure relates generally to fluid seals, and more particularly to reducing fatigue of fluid seals for hydraulic couplings.

### Background

Quick couplings are devices that allow connection of a single fluid line without a need for special tools. Individual quick couplings typically have a ball locking mechanism to prevent male and female portions of the quick couplings from separating due to internal hydraulic pressure during use.

Multi-couplings typically utilize a group of quick couplings that have male and female portions mounted together in a corresponding plate or casting. Instead of an individual locking mechanism, such as a ball locking mechanism, a larger centralized locking mechanism may connect and lock the male portions in one plate to the corresponding female portions in the other plate. Increased pressures within the quick couplings increase separation loads and can require additional loads to connect the quick couplings.

Increasing separation loads increases the amount of force required to connect and lock the quick couplings, and may require a more effective sealing mechanism between corresponding male and female portions of the quick couplings. Sealing mechanisms commonly utilize elastomeric or polymeric seals, but elastomeric and polymeric materials have limitations regarding pressure, temperature, and chemical compatibility. Metal seals are often used to avoid the disadvantages associated with elastomeric and polymeric materials.

UK Patent Publication No. GB-264524 discloses a joint-making packing for pipe joints, covers of vessels and the like of a type comprising a metal ring expanded by fluid pressure. The ring is of wedge section (V or U-shaped) and engages inclined seating surfaces formed on opposed surfaces in such a manner that the seating pressure is increased by the movement of the packing under the influence of the fluid pressure. An axis of the wedge section is parallel to the vessel to be packed, or at right angles thereto. The packing ring is elastic, and a space for receiving the ring is made with the inclined sliding surfaces, and sufficient clearance for the ring to be displaced in the direction of the axis of the wedge, so that the pressure which the packing is to withstand causes the ring to be displaced and an increase in its pressure on the seating.

### Summary

The present disclosure provides a seal retainer having an axially facing surface with an axially facing concave portion for receiving a convex face of a sealing member. The axially facing concave portion allows the sealing member to be seated in the axially facing concave portion and retain at least some of its shape when under pressure, such as separation pressure within a quick coupling, to reduce stresses acting on the sealing member. Thus, the sealing member may undergo less fatigue when cycling between a pressurized and non-pressurized state. Reducing fatigue allows sealing members, such as metal sealing members, to endure a greater amount of cycles before leaking, which reduces replacement costs of the sealing members.

The axially facing concave portion may generally extend circularly about a longitudinal axis and have a cross-sectional profile that is configured to support the sealing member. For example, the sealing member may be a metal C-shape ring seal that has an open end facing axially and an axially facing convex face. A cross-section of the axially facing concave portion, parallel to the longitudinal axis, may be C-shape to receive the axially facing convex face.

According to the present invention, there is provided an assembly for a hydraulic component as claimed in claim 1. The assembly comprises a seal retainer and a sealing member.

Optional further features of the assembly are defined in the dependent claims. A hydraulic coupling comprising the assembly is also defined in the dependent claims.

The seal retainer of the assembly for a hydraulic component includes a radially inward facing surface extending about a longitudinal axis and extending along the longitudinal axis, an axially facing surface extending radially outward from the radially inward facing surface, the axially facing surface facing in a first direction along the longitudinal axis, and an axially facing concave portion formed in the axially facing surface, the axially facing concave portion facing in the first direction and configured to receive a convex face of the sealing member, wherein the axially facing concave portion extends along a curved axis, the curved axis being centred on the longitudinal axis and circumscribing the longitudinal axis.

A hydraulic coupling includes a female hydraulic coupling component, a male hydraulic coupling component engaged with the female hydraulic coupling component, and the assembly. The female hydraulic component includes a housing having an opening configured to receive the male hydraulic coupling component, and having a flow cavity fluidly connectable to the opening and extending along a longitudinal axis, and the seal retainer in the opening. The radially inward facing surface of the seal retainer is configured to receive a radially outwardly facing surface of the male hydraulic coupling component.

The foregoing and other features of the invention are hereinafter described in greater detail with reference to the accompanying drawings.

### Brief Description of the Drawings

Fig. 1 is a perspective view of a multi-coupling holding a plurality of exemplary male coupling components and female coupling components.
Fig. 2 is a perspective view of a male and female coupling component of Fig. 1.
Fig. 3 is a front view of the female coupling component of Fig. 2.
Fig. 4 is a side view of a partial cross-section of the female coupling component of Fig. 2 including an exemplary seal retainer.
Fig. 5 is an enlarged side view of a portion of the partial cross-section of the female coupling component including the seal retainer of Fig. 4.
Fig. 6 is a side view of a partial cross-section of the female coupling component of Fig. 4 and the male coupling component of Fig. 2 engaged with the female coupling component.
Fig. 7 is a partial perspective view of an exemplary sealing member of Fig. 6.
Fig. 8 is an enlarged side view of female coupling component engaged with the male coupling component of Fig. 6.
Fig. 9 is a front view of the seal retainer of Fig. 4.
Fig. 10 is a side view of a cross-section of the seal retainer of Fig. 9.
Fig. 11 is a side view of a partial cross-section of a valve assembly with another exemplary seal retainer.
Fig. 12 is a side view of a partial cross-section of the valve assembly of Fig. 11 with accompanying arrows showing pressure on the sealing member.
Fig. 13 is a side view of a cross-section of a seal retainer not comprised by the present invention.
Fig. 14 is a side view of a cross-section of another seal retainer not comprised by the present invention.

### Detailed Description

The principles of this present application have particular application to female coupling components for hydraulic systems and thus will be described below chiefly in this context. For example, the female coupling components may connect hydraulic control lines. It will be appreciated that principles of this disclosure may be applicable to other hydraulic systems where it is desirable to prevent leakage of hydraulic fluid.

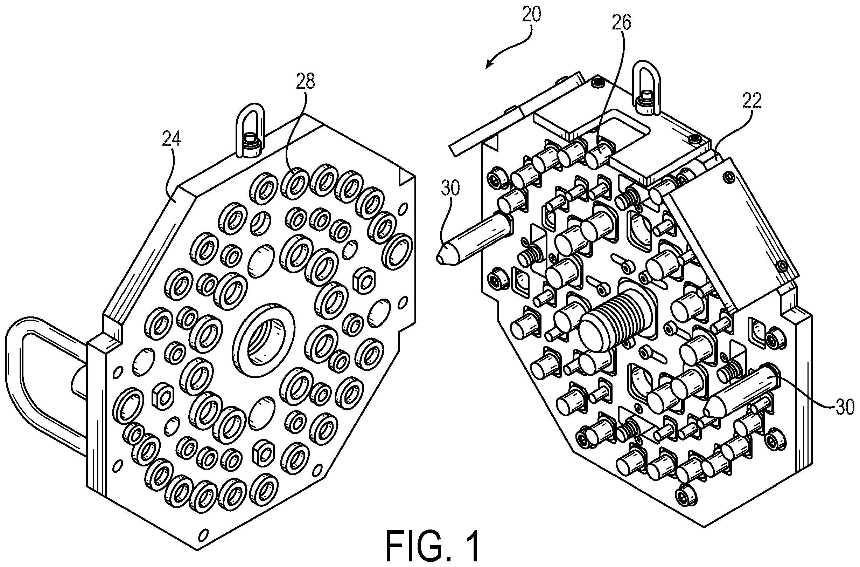

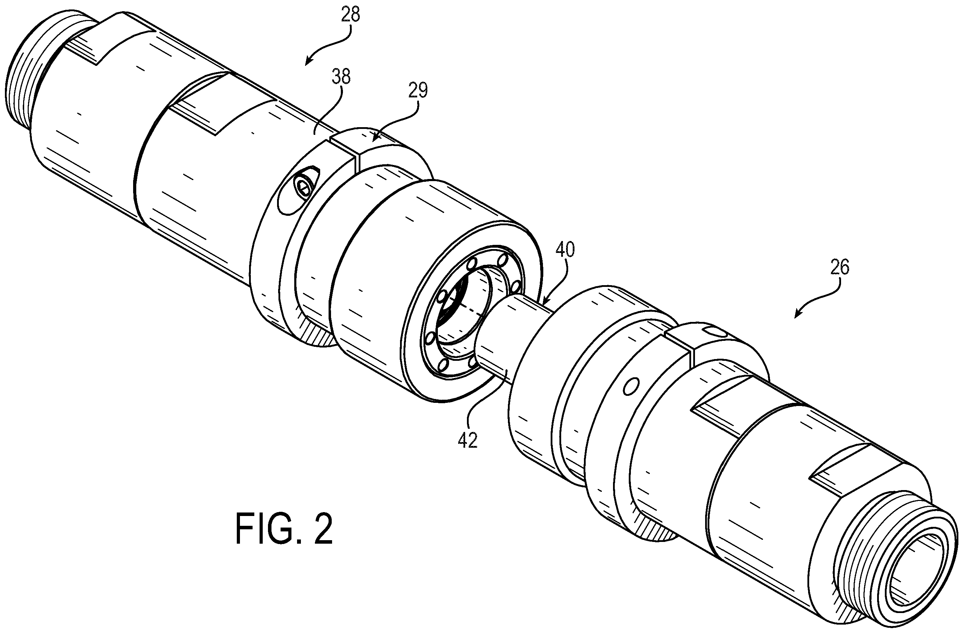

Referring now to the drawings and initially to Fig. 1, a multi-coupling is designated generally by reference numeral 20. The multi-coupling 20 can be provided, for example, as part of a hydraulic system (not shown) for sub-sea hydraulic applications, such as providing hydraulic fluid to sub-sea oil wells. The multi-coupling 20 may include a fixed plate 22 and a free plate 24 for securing a plurality of male coupling components 26 and a plurality of female coupling components 28, respectively. In an embodiment, the female coupling components include a clam shell retainer 29 (shown in Fig. 2) to secure the female coupling components to the free plate. An example can be found in U.S. Application No. 14/665, 250 (US Patent Publication No. US-2015/0308599) filed March 23, 2015 and titled MULTI-COUPLING WITH SERVICEABLE LOCKING MECHANISM. The fixed plate 22 may include a guide pin 30 at each side of the fixed plate 22 for guiding the free plate 24 against the fixed plate 22 to align the female coupling components 28 to engage with the male coupling components 26. After engagement, the fixed plate 22 and the free plate 24 may lock together to prevent disengagement of the male coupling components 26 and the female coupling components 28.

Hydraulic lines (not shown) may fluidly connect to each of the male coupling components 26 and the female coupling components 28 to provide hydraulic fluid, for example to provide hydraulic power to a corresponding oil well (not shown).

Fig. 2 is a perspective view of one male coupling component 26 and one corresponding female coupling component 28 having a coupler body 38. The male coupling component 26 includes a nipple 40 having a radially outward facing surface 42 for engaging with an interior portion within the coupler body 38 of the female coupling component 28. When engaged, the radially outward facing surface 42 may seal against a radially inward facing surface of the female coupling component 28.

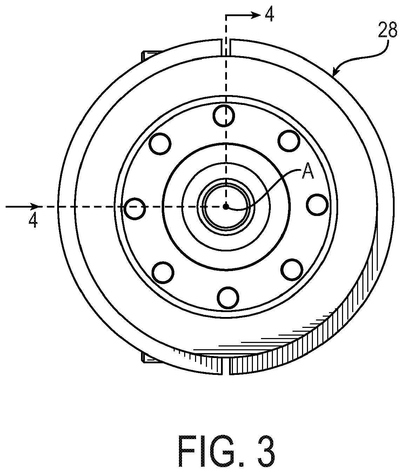

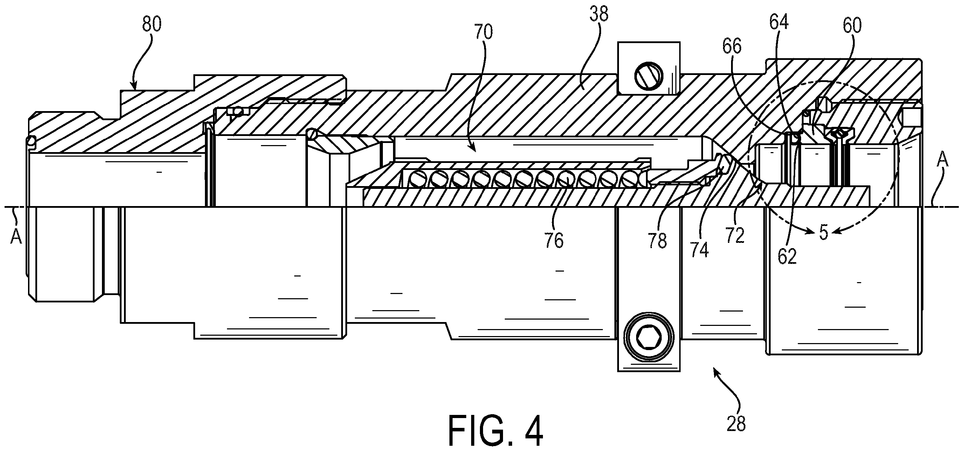

Figs. 3 and 4 illustrate the female coupling component 28 extending along a longitudinal axis A. Fig. 4 provides a side view of a partial cross-section of a seal retainer 60 held within the coupler body 38. The seal retainer 60 may include an axially facing retainer surface 62 with an axially facing concave portion 64 for securing a sealing member. Securing the sealing member prevents leakage of hydraulic fluid between the coupler body 38 and the male coupling component 26 (Fig. 2), when the female coupling component 28 and the male coupling component 26 are engaged.

The sealing member may include a C-ring seal 66 with an axially facing opening opposite the seal retainer 60 to allow the C-ring seal 66 to seal radially inwardly and/or radially outwardly, relative to the longitudinal axis A. For example, a radially inward portion of the C-ring seal 66 may engage with a male coupling component 26 (Fig. 2) to seal against the male coupling component 26 (Fig. 2).

The coupler body 38 may include a flow cavity 70 for allowing fluid flow, along the longitudinal axis A, through the female coupling component 28. The female coupling component 28 may include a valve 72 and a valve seat 74 for engaging with the valve 72 to selectively restrict fluid flow through the flow cavity 70. For example, flow through the flow cavity 70 may be restricted when the female coupling component 28 and the male coupling component 26 are disengaged. Also, flow through the flow cavity 70 may be allowed when the female coupling component 28 and the male couple component 26 are engaged.

The female coupling component 28 may further include a resilient member 76 and a valve seal 78. The resilient member 76 may induce the valve 72 and the valve seal 78 into a closed position against the valve seat 74. The valve seal 78 may be a ring seal for providing additional sealing engagement to prevent leakage of fluid between the valve 72 and the valve seat 74.

The female coupling component 28 may also include an adapter 80 at an axial end opposite the seal retainer 60. The adapter 80 may allow the female coupling component 28 to fluidly connect to a separate hydraulic line (not shown) or another hydraulic component (not shown) to allow fluid to flow through the flow cavity 70 and out the adapter 80 to the hydraulic line or the hydraulic component. For example, fluid may flow through a central opening in the adapter 80 to a central opening in the coupler body 38 where the fluid may flow radially outwardly about the valve 72 and follow a generally longitudinal path until reaching the valve seat 74. When the valve 72 is open the fluid may continue to follow a longitudinal path out of the coupler body 38. Alternatively, the fluid may flow in an opposite direction from the hydraulic line or the hydraulic component through the adapter and further through the flow cavity.

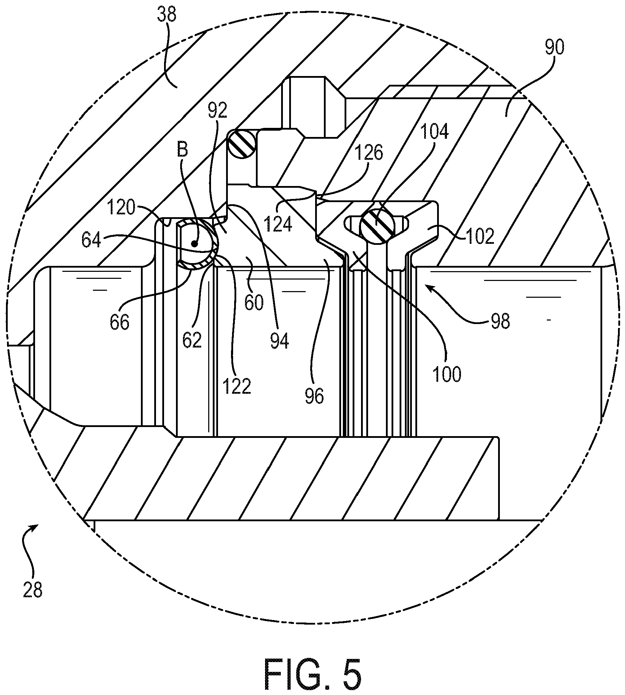

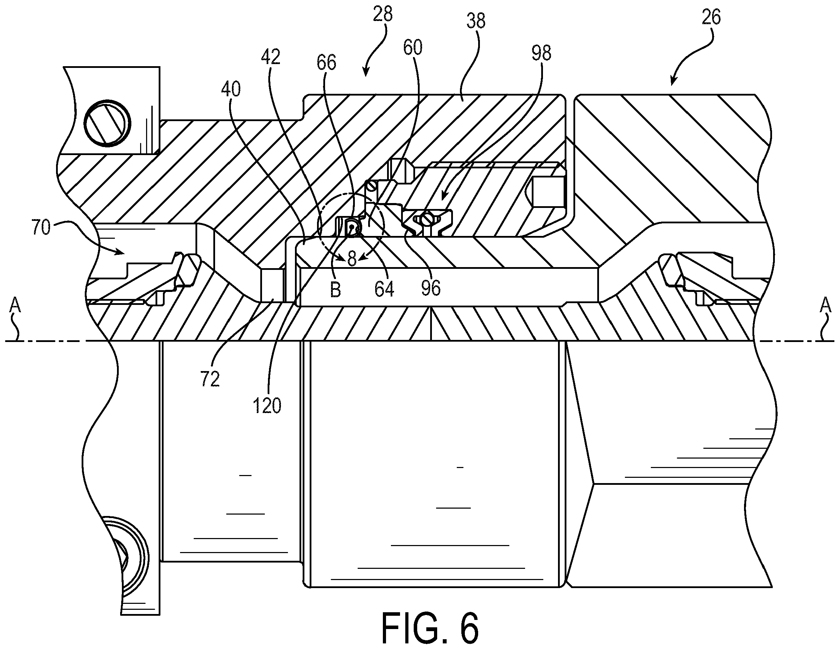

Referring now to Figs. 5 and 6, the axially facing retainer surface 62 and the axially facing concave portion 64 of the seal retainer 60 are illustrated in further detail with the C-ring seal 66. The seal retainer 60 may be axially retained against the coupler body 38 by a secondary retainer 90 that is fixed to the coupler body 38. For example, threading on a radially outwardly facing surface of the secondary retainer may engage radially inwardly facing threads of the coupler body to secure the secondary retainer 90 to the coupler body 38, and thereby retain the seal retainer 60. Alternatively, the secondary retainer may be fixed to the coupler body in any other suitable manner, such as press-fitting the secondary retainer into the coupler body.

The seal retainer 60 may be fixed at an end of the coupler body 38 that receives the male coupling component 26 (Fig. 6). The position of the seal retainer 60 may prevent axial movement of the C-ring seal 66 in a direction toward the seal retainer 60 when the C-ring seal 66 is seated in the axially facing concave portion 64. The seal retainer 60 may include an axially extending ledge 92 extending longitudinally beyond a portion of an axially facing body surface 94 that engages the seal retainer 60. At an opposite end, along the longitudinal axis A, the seal retainer 60 may include a foot 96 for securing a secondary seal 98 between the seal retainer 60 and the secondary retainer 90.

The C-ring seal 66 may be seated in the axially facing concave portion 64 to seal against a radially inward facing surface 120 of the coupler body 38. The C-ring seal 66 may have a radially inwardly facing surface facing toward the longitudinal axis A for sealing against the radially outward facing surface 42 of the nipple 40 of the male coupling component 26 (Fig. 6).

Referring briefly to Fig. 6 alone, the male coupling component 26 is engaged with the female coupling component 28 to open the valve 72, thereby allowing fluid to flow through the flow cavity 70. When the fluid flows, pressure in the fluid may force some of the fluid between the radially outward facing surface 42 and the coupler body 38. The fluid may reach the C-ring seal 66, which may cause the C-ring seal 66 to expand radially outwardly, relative to a curved axis, such as circular axis B, to seal against the radially inward facing surface 120 of the coupler body 38 and the radially outward facing surface 42 of the nipple 40. The circular axis B may circumscribe the longitudinal axis A - centred on (coaxial with) the longitudinal axis A - in a plane perpendicular to the longitudinal axis A.

Referring again to Figs. 5 and 6, an axially facing surface 122, relative to the longitudinal axis, of the C-ring seal 66 may extend along the circular axis B. The axially facing surface 122 faces in a direction opposite the axially facing concave portion 64 to allow the axially facing surface 122 and the axially facing concave portion 64 to engage one another. The axially facing surface 122 may partially circumscribe the circular axis B in a C-shape. The axially facing surface 122 circumscribes the circular axis B with a radius less than a corresponding radius of the axially facing concave portion 64 to allow the axially facing surface 122 to expand radially outward from the circular axis B after abutting a portion of the axially facing concave portion 64.

The secondary seal 98 may include a pair of V-shape ring seals 100, 102 for sealing against the radially outwardly facing surface 42 of the nipple 40 (Fig. 6) of the male coupling component 26 (Fig. 6). The V-shape ring seals 100, 102 may sandwich a ring member 104, which may be a spring or sealing member for supporting the V-shape ring seals 100, 102 and/or providing additional sealing against the radially outwardly facing surface 42 of the nipple 40 (Fig. 6) as a backup seal for the C-ring seal 66.

The secondary retainer 90 may be a ring shape, coaxial with the longitudinal axis A, with an axially facing surface 124 for engaging an opposing axially facing surface 126 of the seal retainer 60. The axially facing surface 124 of the secondary retainer 90 may, along the longitudinal axis A, axially fix a radially outward portion of the axially facing retainer surface 62 of the seal retainer 60 to the opposing axially facing body surface 94 of the coupler body 38.

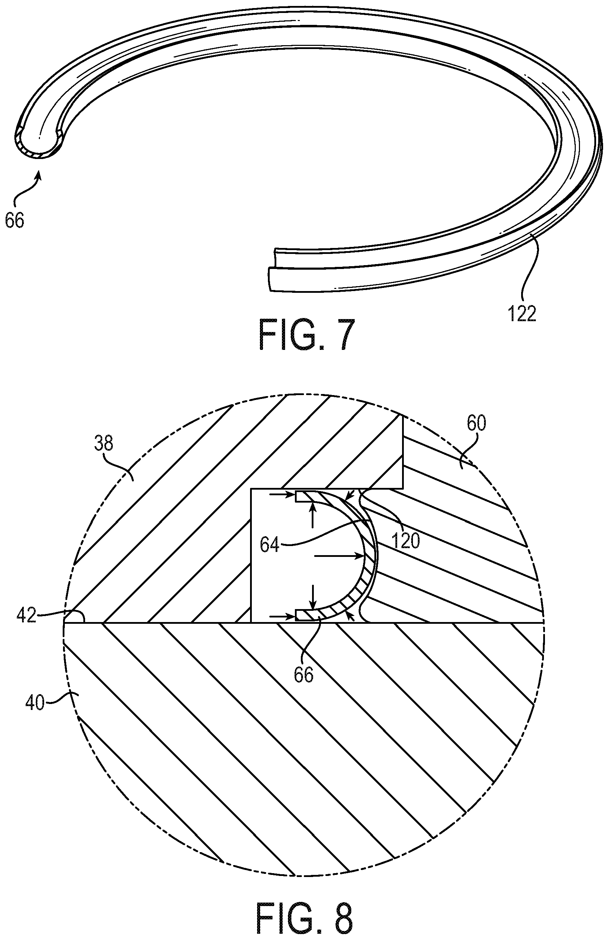

Referring briefly to Fig. 7, the C-ring seal 66 is shown with a perspective view with a section removed for illustrative purposes. The entire C-ring seal 66 extends circumferentially 360° to form a complete ring. For example, the C-ring seal 66 may form a complete circle about the longitudinal axis.

Referring briefly to Fig. 8, the C-ring seal 66 is illustrated as seated in the axially facing concave portion 64 of the seal retainer 60. Fluid may flow from a hydraulic system (not shown) to the C-ring seal 66. The fluid may flow between the radially outward facing surface 42 of the nipple 40, and the coupler body 38 to reach the C-ring seal 66 to pressurize the C-ring seal 66 causing the C-ring seal 66 to expand. Pressure forces acting on the C-ring seal 66 are illustrated with arrows. For example, a high fluid pressure may force a portion of the C-ring seal 66 against the radially outward facing surface 42. Also, fluid pressure may force another portion of the C-ring seal 66 against the radially inward facing surface 120. A low fluid pressure may come from between the seal retainer 60 and either the coupler body 38 or the radially outward facing surface 42, but the low fluid pressure may be significantly lower than the fluid pressure that causes the C-ring seal 66 to expand.

The high fluid pressure may be intermittent, thus causing respective ends of the C-ring seal 66 to expand and deform upon receiving the pressure and to constrict and deform when the high fluid pressure lowered or removed. The axially facing concave portion 64 supports the C-ring seal 66 to reduce deformation of the C-ring seal 66 when expanding and/or when contracting due to the intermittent pressures. Thus, fatigue loading of the C-ring seal 66 may be reduced. Further details of the axially facing concave portion 64 are provided below.

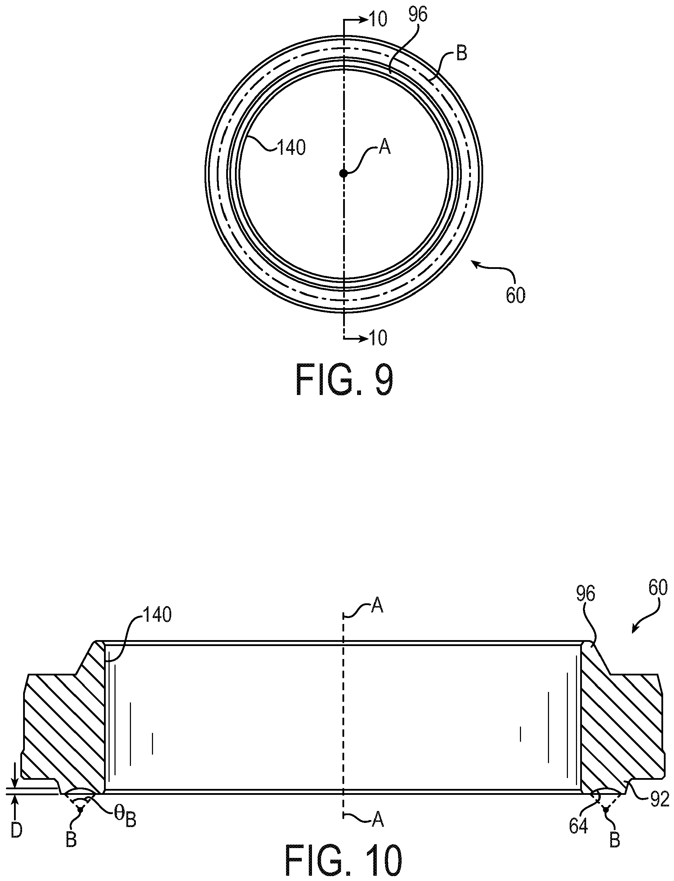

Referring now to Figs. 9 and 10, the seal retainer 60 may be cylindrical with a radially inwardly facing surface 140 - that is coaxial with the longitudinal axis A - for receiving the male coupler component 28 (Fig. 6).

The foot 96 may be any suitable shape for retaining the secondary seal 98 (Fig. 8 only). The foot 96 is illustrated extending axially along the longitudinal axis A away from the ledge 92 and with a radially inwardly facing surface continuous with the radially inwardly facing surface 140. The foot 96 may be radially thinner at an end furthest from the axially extending ledge 92 compared to an end closest to the axially extending ledge 92 for accommodating the secondary seal 98 and for preventing radially inward movement of the secondary seal 98. In an embodiment, the seal retainer does not include a foot.

The axially extending ledge 92, as mentioned above, may axially off-set the C-ring seal 66. The axially extending ledge 92 may be coaxial with the circular axis B and include the axially facing concave portion 64. The axially facing concave portion 64 may have a larger radius compared to the radially inwardly facing surface 140, to radially outwardly off-set the C-ring seal 66 (Fig. 6). The distance of the radially outward off-set may be based on a size of the C-ring seal 66 and the axially facing concave portion 64. In an embodiment, the axially facing concave portion is off-set, relative to the longitudinally axis A, radially outward from the radially inwardly facing surface a distance less than a radius of the axially facing concave portion, relative to the circular axis B. In an alternative embodiment, the axially facing concave portion is not radially off-set from the radially inwardly facing surface.

The axially facing concave portion 64 may form a continuous concavity about the longitudinal axis A. The continuous concavity allows the corresponding sealing member to seat evenly in the axially facing concave portion 64. For example, the C-ring seal 66 may extend entirely along the circular axis B to be coaxial with the longitudinal axis A.

The radius of the axially facing concave portion 64 relative to the circular axis B may be based on the size of the C-ring seal 66 (Fig. 6). For example, the radius of the axially facing concave portion 64 may be between about 3% and about 10% larger than the radius of the C-ring seal 66 relative to the circular axis B to allow the C-ring seal 66 to expand radially outward relative to the circular axis B. Alternatively, the radius of the axially facing concave portion may be between about 4% and about 8% larger than the radius of the C-ring seal relative to the circular axis.

For example, the radius of the axially facing concave portion may be 8% larger than the radius of the C-ring seal (e.g., the radius of the axially facing concave portion may be .035" (0.889mm) to accommodate a C-ring seal with a radius of .0323" (0.8204mm)). In another example, the radius of the axially facing concave portion may be 4% larger than the radius of the C-ring seal (e.g., the radius of the axially facing concave portion may be .05" (1.27mm) to accommodate a C-ring seal with a radius of .048" (1.219mm)). In an embodiment, relative to the circular axis, the radius of the axially facing concave portion is 5% larger than the radius of the sealing member.

An angle θ_{B} formed by the axially facing concave portion relative to the circular axis B may be based on the size and strength of the C-ring seal 66. For example, the angle θ_{B} may be anywhere from 60° to 120°. In an embodiment, the angle θ_{B} is anywhere from 60° to 90°.

A depth D of the axially facing concave portion, along the longitudinal axis A, may be based on the size and strength of the C-ring seal 66. For example, the depth D may be between 10% and 25 % of the radius of the axially facing concave portion 64 relative to the circular axis B. For example, the depth may be anywhere from .007" to .015" (0.178mm to 0.381mm).

When a fluid pressurizes the C-ring seal 66 (Fig. 6) the radially outer and radially inner portions expand radially, relative to the longitudinal axis A. Also, the seal retainer 60 partially limits the expansion to reduce stress of the seal member 66. The seal member 66 may expand within the seal retainer 60 and the seal retainer 60 reinforces a curvature of the C-ring seal 66. The reinforcement may reduce deformation of the C-ring seal 66 due to the limiting of the expansion. The reinforcement also prevents flattening of the C-ring seal 66 to improve sealing effectiveness of the C-ring seal 66.

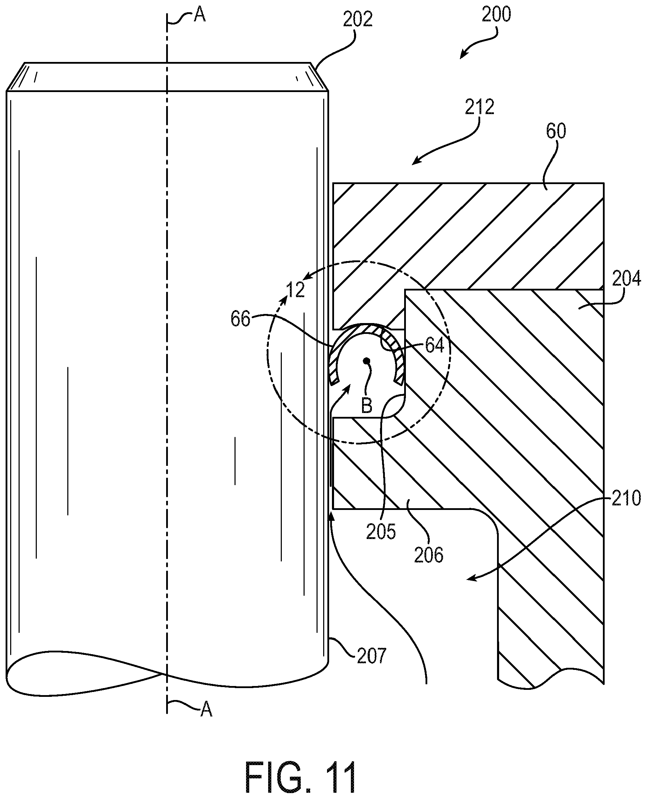

Turning now to Fig. 11, a valve assembly is shown at 200. The valve assembly 200 includes an exemplary embodiment of the seal retainer 60. The seal retainer 60 is substantially the same as the above-referenced seal retainer 60, and consequently the same reference numerals denote structures corresponding to similar structures in the seal retainers. In addition, the foregoing description of the seal retainer 60 is equally applicable to the following seal retainer 60 except as noted below. Moreover, it will be appreciated that aspects of the seal retainers may be substituted for one another or used in conjunction with one another where applicable.

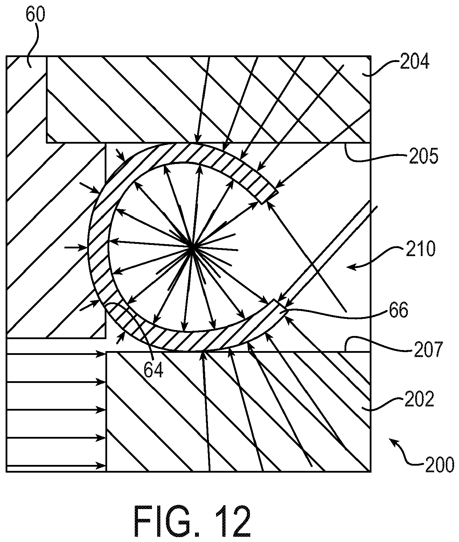

The valve assembly 200 may include a valve 202 that is moveable along a longitudinal axis A relative to an axially inner body 204 and the seal retainer 60. The seal retainer 60 has an axially facing concave portion 64 that may axially engage a C-ring seal 66 that circumscribes the valve 202. Engaging the C-ring seal 66 with the seal retainer 60 may prevent the C-ring seal 66 from moving axially with the valve 202 when the valve 202 extends in a first direction, e.g., parallel to the longitudinal axis A. Engaging the C-ring seal 66 with the seal retainer 60 also prevents the C-ring seal 66 from moving in the first direction when fluid pressurizes the C-ring seal 66. The fluid pressure is represented by the illustrated arrows leading to the C-ring seal 66. The axially inner body 204 may include a radially inward ledge 206 (shown in Fig. 12) that may prevent movement of C-ring seal 66 in the second direction, opposite the first direction, away from the seal retainer 60. For example, the radially inward ledge 206 may prevent the C-ring seal 66 from moving with the valve 202 when the valve 202 retracts.

As illustrated in Fig. 12, pressurized fluid from an inner portion 210 of the valve assembly 200 and moving in the first direction may cause the C-ring seal 66 to expand within the axially facing concave portion 64. The expansion causes sides of the C-ring seal 66 to seal against a radially inwardly facing surface 205 of the axially inner body 204 and a radially outwardly facing surface 207 of the valve 202 to prevent fluid axial fluid flow between the respective components. Some fluid from outside of the valve assembly 200 may move in the second direction, opposite the first direction, to urge the C-ring seal 66 to contract and unseal the valve 202.

The fluid from the inner portion 210 of the valve assembly may act on an open end of the C-ring seal 66. The fluid from the inner portion 210 may have a higher pressure than the fluid from outside 212 of the valve assembly 200. The higher pressure in the fluid from the inner portion 210 causes the C-ring seal 66 to expand against the radially inwardly facing surface 205 and the radially outwardly facing surface 207. When expanded, the C-ring seal 66 may form a seal with the radially inwardly facing surface 205 and/or the radially outwardly facing surface 207.

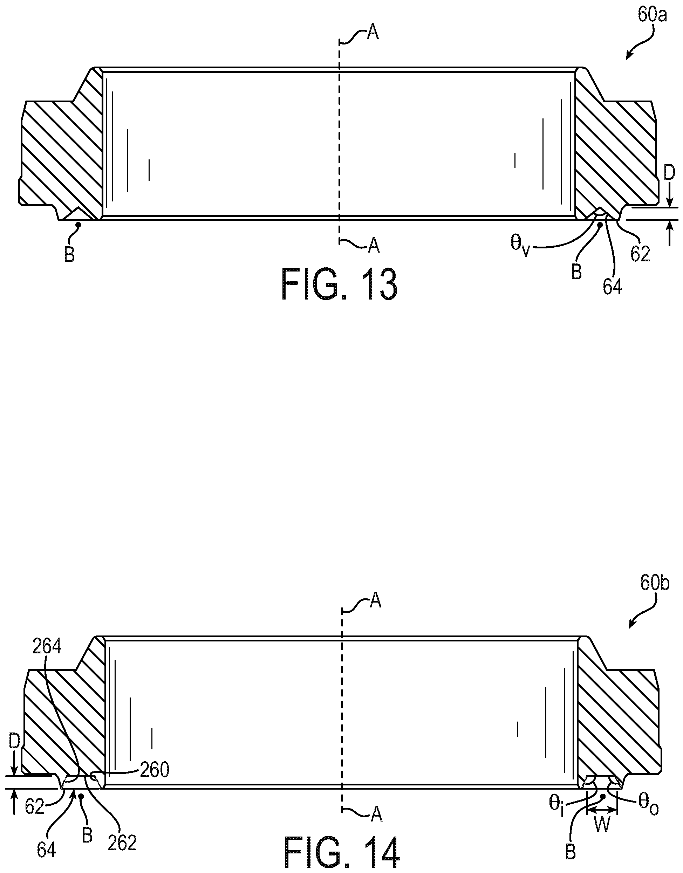

Turning now to Fig. 13, a seal retainer not comprised by the present invention is shown at 60a. The seal retainer 60a is substantially the same as the above-referenced seal retainer 60, and consequently the same reference numerals denote structures corresponding to similar structures in the seal retainers. In addition, the foregoing description of the seal retainer 60 is equally applicable to the following seal retainer 60a except as noted below. Moreover, it will be appreciated that aspects of the seal retainers may be substituted for one another or used in conjunction with one another where applicable.

The seal retainer 60a may include an axially facing retainer surface 62 with an axially facing concave portion 64. The axially facing concave portion 64 may have a V-shape cross-section for receiving a closed end of a sealing member, for example a C-shape sealing member opening axially as shown in Figs. 4-8, 11, and 12.

An angle θ_{V} formed by the axially facing concave portion 64, facing a circular axis B, may be based on the size and strength of the sealing member (e.g., as shown in Fig. 4 at numeral 66). For example, the angle θ_{V} may be anywhere from 80° to 120°. In an embodiment, the angle θ_{V} is anywhere from 90° to 110°.

A depth D of the axially facing concave portion, along the longitudinal axis A, may be based on the size and strength of the corresponding sealing member (e.g., as shown in Fig. 4 at numeral 66). For example, the depth D may be anywhere from 10% to 25% of the radius of the axially facing concave portion 64 relative to the circular axis B.

Turning now to Fig. 14, a seal retainer not comprised by the present invention is shown at 60b. The seal retainer 60b is substantially the same as the above-referenced seal retainers 60, 60a, and consequently the same reference numerals denote structures corresponding to similar structures in the seal retainers. In addition, the foregoing description of the seal retainers 60, 60a is equally applicable to the following seal retainer 60b except as noted below. Moreover, it will be appreciated that aspects of the seal retainers may be substituted for one another or used in conjunction with one another where applicable.

The seal retainer 60b may include an axially facing retainer surface 62 with an axially facing concave portion 64. The axially facing concave portion 64 may have a trapezoidal-shape cross-section for receiving a closed end of a sealing member, for example a C-shape sealing member opening axially as shown in Figs. 4-8, 11, and 12. The axially facing concave portion 64 may face a direction parallel to a longitudinal axis A and extend along a circular axis B.

An angle θᵢ may be formed by a radially inner radially outwardly facing surface 260, extending coaxially with the longitudinal axis A, and an axially facing surface 262 of the axially facing concave portion 64. The axially facing surface 262 may extend coaxially with the longitudinal axis A. The angle θᵢ may be based on the size and strength of the sealing member (e.g., as shown in Fig. 4 at numeral 66). For example, the angle θᵢ may be 120°. In an embodiment, the angle θᵢ is anywhere from 120° to 150°. In another embodiment the axially facing surface is angled at least partially radially outwardly or radially inwardly, relative to the longitudinal axis.

An angle θₒ may be formed by a radially outer radially inwardly facing surface 264, extending coaxially with the longitudinal axis A, and the axially facing surface 262 of the axially facing concave portion 64. The angle θ_{ο} may be based on the size and strength of the sealing member (e.g., as shown in Fig. 4 at numeral 66). For example, the angle θ_{ο} may be 120°. In an embodiment, the angle θ_{ο} is anywhere from 120° to 150°.

A depth D of the axially facing concave portion, along the longitudinal axis A, may based on the function and radius of the sealing member 66. For example, the depth may be anywhere from 10% to 25% the radius of the sealing member.

A minor width W of axially facing concave portion 64 relative to the circular axis B may be less than the radius of the sealing member 66. A major width of the axially facing concave portion 64 is greater than the radius of the sealing member to allow the sealing member 66. The major width being great than the radius of the sealing member 64 allows outer ends of the sealing member 66 to expand when pressurized.

The invention relates to an assembly for a hydraulic component. The seal retainer includes a radially inward facing surface extending about a longitudinal axis and extending along the longitudinal axis, an axially facing surface extending radially outward from the radially inward facing surface, the axially facing surface facing in a first direction along the longitudinal axis, and an axially facing concave portion formed in the axially facing surface, the axially facing concave portion facing in the first direction and configured to receive a convex face of the sealing member, wherein the axially facing concave portion extends along a curved axis, the curved axis being centred on the longitudinal axis and circumscribing the longitudinal axis.

The assembly includes the sealing member, wherein the convex face is seated in the axially facing concave portion.

In an exemplary embodiment, the sealing member may include a C-ring seal that is open in the first direction, wherein the C-ring seal may include the convex face and the convex face faces in a second direction opposite the first direction for the convex face to engage the axially facing concave portion.

In an exemplary embodiment, the axially facing concave portion may form a symmetrical concavity about the longitudinal axis, wherein the symmetrical concavity is configured to concentrically receive the sealing member.

In an exemplary embodiment, the axially facing concave portion may have a radius relative to the curved axis.

In an exemplary embodiment, the radius of the axially facing concave portion may be greater than a radius, relative to the curved axis of the convex face of the sealing member, thereby allowing the sealing member to expand within the axially facing concave portion.

In an exemplary embodiment, the axially facing concave portion may have a C-shape cross-section facing the curved axis.

In an exemplary embodiment, the seal retainer may include a ring that is coaxial with the longitudinal axis.

In an exemplary embodiment, the curved axis may be a circular axis.

The invention also relates to a hydraulic coupling. The hydraulic coupling includes a female hydraulic coupling component and a male hydraulic coupling component engaged with the female hydraulic coupling component, and the assembly. The female hydraulic coupling component includes: a housing having an opening configured to receive the male hydraulic coupling component, and having a flow cavity fluidly connectable to the opening and extending along the longitudinal axis; the seal retainer, which is in the opening, the radially inward facing surface of the seal retainer being configured to receive a radially outwardly facing surface of the male hydraulic coupling component; and the sealing member.

The hydraulic coupling may include any of the above or following features either individually or in combination with one another.

In an exemplary embodiment, the sealing member may be configured to receive flow from the flow cavity, and wherein the sealing member expands upon receiving flow from the flow cavity.

In an exemplary embodiment, the sealing member may include a C-ring seal that is open in the first direction, wherein the C-ring seal may include the convex face and the convex face faces in a second direction opposite the first direction for the convex face to engage the axially facing concave portion.

In an exemplary embodiment, the axially facing concave portion may form a symmetrical concavity about the longitudinal axis, wherein the symmetrical concavity may be configured to concentrically receive the sealing member.

In an exemplary embodiment, the radius of the axially facing concave portion is relative to the curved axis.

In an exemplary embodiment, the axially facing concave portion may have a C-shape cross-section facing the curved axis.

In an exemplary embodiment, the seal retainer may include a ring that is coaxial with the longitudinal axis.

In an exemplary embodiment, the curved axis may be a circular axis.

In an exemplary embodiment, the housing may further include a seat surrounding a portion of the flow cavity, and the hydraulic coupling may further include a valve member moveable within the flow cavity, the valve member being moveable between a closed position and an open position, when in the closed position the valve member is engaged with the valve seat to prevent flow through the flow cavity, and when in the open position the valve member is spaced from the valve seat to allow fluid to flow through the flow cavity.

In an exemplary embodiment, the sealing member may be configured to receive flow from the flow cavity when the valve is opened by the male hydraulic coupling component.

## Claims

1. An assembly for a hydraulic component (28), the assembly comprising:
a seal retainer (60) comprising:
a radially inward facing surface extending about a longitudinal axis (A) and extending along the longitudinal axis (A);
an axially facing surface (62) extending radially outward from the radially inward facing surface, the axially facing surface (62) facing in a first direction along the longitudinal axis (A); and
an axially facing concave portion (64) formed in the axially facing surface (62), the axially facing concave portion (64) facing in the first direction and configured to receive a convex face (122) of a sealing member (66), wherein the axially facing concave portion (64) extends along a curved axis (B), the curved axis (B) being centred on and circumscribing the longitudinal axis (A);
the assembly further comprising:
the sealing member (66), wherein the convex face (122) is seated in the axially facing concave portion (64), and wherein the convex face (122) forms an axial end of the sealing member (66);
wherein when the sealing member (66) is pressurized,
the sealing member (66) is engaged with the axially facing concave portion (64) of the axially facing surface (62) of the seal retainer (60) to prevent the sealing member (66) from moving in a second direction opposite to the first direction;
radially outer and radially inner portions of the sealing member (66) expand radially, relative to the longitudinal axis (A); and
the axially facing surface (62) of the seal retainer (60) partially limits the expansion to reduce stress of the sealing member (66) and the axially facing surface (62) of the seal retainer (60) reinforces a curvature of the sealing member (66), thereby preventing flattening of the sealing member (66) to improve sealing effectiveness of the sealing member (66);
wherein the convex face (122) faces opposite the axially facing concave portion (64) to allow the convex face (122) and the axially facing concave portion (64) to engage one another; and
wherein the convex face (122) circumscribes the curved axis (B) with a radius less than a corresponding radius of the axially facing concave portion (64) to allow the convex face (122) to expand radially outward from the curved axis (B) after abutting a portion of the axially facing surface (62) that defines the axially facing concave portion (64).

2. The assembly of claim 1, wherein the sealing member (66) includes a C-ring seal that is open in the first direction, wherein the C-ring seal includes the convex face (122).

3. The assembly of any one of claims 1-2, wherein the axially facing concave portion (64) forms a symmetrical concavity about the longitudinal axis (A), wherein the symmetrical concavity is configured to concentrically receive the sealing member (66).

4. The assembly of any one of claims 1-3, wherein the axially facing concave portion (64) has a C-shape cross-section facing the curved axis (B).

5. The assembly of any one of claims 1-4, wherein the seal retainer (60) includes a ring that is coaxial with the longitudinal axis (A), optionally wherein the curved axis (B) is a circular axis.

6. A hydraulic coupling (26, 28) comprising:
a female hydraulic coupling component (28) and a male hydraulic coupling component (26) engaged with the female hydraulic coupling component (28); and
the assembly of claim 1;
wherein the female hydraulic coupling component (28) comprises:
a housing (38) having an opening configured to receive the male hydraulic coupling component (26), and having a flow cavity (70) fluidly connectable to the opening and extending along the longitudinal axis (A), wherein the housing (38) further comprises a seat (74) surrounding a portion of the flow cavity (70);
the seal retainer (60), which is in the opening, the radially inward facing surface of the seal retainer (60) being configured to receive a radially outwardly facing surface of the male hydraulic coupling component (26); and
the sealing member (66);
the hydraulic coupling (26, 28) further comprising:
a valve member (72) moveable within the flow cavity (70), the valve member (72) being moveable between a closed position and an open position, when in the closed position the valve member (72) is engaged with the valve seat (74) to prevent flow through the flow cavity (70), and when in the open position the valve member (72) is spaced from the valve seat (74) to allow fluid to flow through the flow cavity (70).

7. The hydraulic coupling (26, 28) of claim 6, wherein the sealing member (66) is configured to receive flow from the flow cavity (70), and wherein the sealing member (66) expands upon receiving flow from the flow cavity (70).

8. The hydraulic coupling (26, 28) of any one of claims 6-7, wherein the sealing member (66) includes a C-ring seal that is open in the first direction, wherein the C-ring seal includes the convex face (122) and the convex face (122) faces in the second direction for the convex face (122) to engage the axially facing concave portion (64), optionally wherein the axially facing concave portion (64) forms a symmetrical concavity about the longitudinal axis (A), and wherein the symmetrical concavity is configured to concentrically receive the sealing member (66), optionally wherein the radius of the axially facing concave portion (64) is relative to the curved axis (B), optionally wherein the radius of the convex face (122) of the sealing member (66) is relative to the curved axis (B).

9. The hydraulic coupling (26, 28) any one of claims 6-8, wherein the axially facing concave portion (64) has a C-shape cross-section facing the curved axis (B).

10. The hydraulic coupling (26, 28) of any one of claims 6-9, wherein the seal retainer (60) includes a ring that is coaxial with the longitudinal axis (A), optionally wherein the curved axis (B) is a circular axis.

11. The hydraulic coupling (26, 28) of any one of claims 6-10, wherein the sealing member (66) is configured to receive flow from the flow cavity (70) when the valve member (72) is opened by the male hydraulic coupling component (26).

12. The assembly or hydraulic coupling (26, 28) of any one of claims 1-11, wherein a depth D of the axially facing concave portion (64), along the longitudinal axis (A), is between 10% and 25% of a radius of the axially facing concave portion (64) relative to the curved axis B, optionally the depth is anywhere from 0.178mm to 0.381mm (.007" to .015"), optionally wherein the axial end of the sealing member (66) is engaged with a portion of the axially facing surface (62) that defines the axially facing concave portion (64), optionally wherein a radius of the axially facing concave portion (64) is between about 3% and about 10% larger than a radius of the sealing member (66) relative to the curved axis (B) to allow the sealing member (66) to expand radially outward relative to the curved axis (B), optionally wherein the radius of the axially facing concave portion (64) is between about 4% and about 8% larger than the radius of the sealing member (66) relative to the curved axis (B), optionally wherein an angle (θ_{B}) formed by the axially facing concave portion (64) relative to the curved axis (B) is anywhere from 60° to 120°, optionally the angle (θ_{B}) is anywhere from 60° to 90°.

13. The hydraulic coupling (26, 28) of any one of claims 6-12, wherein the entire axially facing concave portion (64) is radially between a radially inner portion of the sealing member (66) and a radially outer portion of the sealing member (66), relative to the longitudinal axis (A), optionally wherein the sealing member (66) is metal.

14. The hydraulic coupling (26, 28) of any one of claims 6-13, wherein when the sealing member (66) is pressurized the radially outer portion of the sealing member (66) seals against a portion of a radially inward facing surface (120/205) of the housing (38), and the radially inner portion of the sealing member (66) seals against a portion of a radially outward facing surface (42/207) of the male hydraulic coupling component (26); and
wherein the axially facing concave portion (64) is entirely axially offset along the longitudinal axis (A) from the portion of the radially inward facing surface (120/205) of the housing (38) and a portion of the radially outward facing surface (42/207) of the male hydraulic coupling component (26).

## Patentansprüche

1. Anordnung für eine hydraulische Komponente (28), wobei die Anordnung umfasst:
eine Dichtungshalterung (60), umfassend:
eine radial nach innen weisende Oberfläche, die sich um eine Längsachse (A) herum erstreckt und die sich entlang der Längsachse (A) erstreckt;
eine axial weisende Oberfläche (62), die sich von der radial nach innen weisenden Oberfläche nach außen erstreckt, wobei die axial weisende Oberfläche (62) in einer ersten Richtung entlang der Längsachse (A) weist; und
einen axial weisenden konkaven Teil (64), der in der axial weisenden Oberfläche (62) ausgebildet ist, wobei der axial weisende konkave Teil (64) in der ersten Richtung weist und dazu konfiguriert ist, eine konvexe Fläche (122) eines Dichtungselements (66) aufzunehmen, wobei der axial weisende konkave Teil (64) sich entlang einer gekrümmten Achse (B) erstreckt, wobei die gekrümmte Achse (B) auf der Längsachse (A) zentriert ist und diese umschreibt;
wobei die Anordnung ferner umfasst:
das Dichtungselement (66), wobei die konvexe Fläche (122) in dem axial weisenden konkaven Teil (64) sitzt und wobei die konvexe Fläche (122) ein axiales Ende des Dichtungselements (66) ausbildet;
wobei bei einer Druckbeaufschlagung des Dichtungselements (66)
das Dichtungselement (66) mit dem axial weisenden konkaven Teil (64) der axial weisenden Oberfläche (62) der Dichtungshalterung (60) in Eingriff ist, um zu verhindern, dass das Dichtungselement (66) sich in einer der ersten Richtung entgegengesetzten zweiten Richtung bewegt;
sich radial äußere und radial innere Teile des Dichtungselements (66) relativ zur Längsachse (A) radial ausdehnen;und
die axial weisende Oberfläche (62) der Dichtungshalterung (60) die Ausdehnung teilweise einschränkt, um Spannungen des Dichtungselements (66) zu verringern, und die axial weisende Oberfläche (62) der Dichtungshalterung (60) eine Krümmung des Dichtungselements (66) verstärkt, wodurch ein Flachdrücken des Dichtungselements (66) verhindert wird, um eine Dichtungswirkung des Dichtungselements (66) zu steigern;
wobei die konvexe Fläche (122) dem axial weisenden konkaven Teil (64) gegenüberliegt, um es der konvexen Fläche (122) und dem axial weisenden konkaven Teil (64) zu ermöglichen, miteinander in Eingriff zu kommen; und
wobei die konvexe Fläche (122) die gekrümmte Achse (B) mit einem Radius umschreibt, der kleiner als ein entsprechender Radius des axial weisenden konkaven Teils (64) ist, um es der konvexen Fläche (122) zu ermöglichen, sich von der gekrümmten Achse (B) radial nach außen auszudehnen, nachdem es gegen einen Teil der axial weisenden Oberfläche (62) gestoßen ist, die den axial weisenden konkaven Teil (64) definiert.

2. Anordnung gemäß Anspruch 1, wobei das Dichtungselement (66) eine C-Ring-Dichtung umfasst, die in der ersten Richtung offen ist, wobei die C-Ring-Dichtung die konvexe Fläche (122) aufweist.

3. Anordnung gemäß einem der Ansprüche 1 bis 2, wobei der axial weisende konkave Teil (64) um die Längsachse (A) eine symmetrische Konkavität ausbildet, wobei die symmetrische Konkavität dazu konfiguriert ist, das Dichtungselement (66) konzentrisch aufzunehmen.

4. Anordnung gemäß einem der Ansprüche 1 bis 3, wobei der axial weisende konkave Teil (64) einen C-förmigen Querschnitt hat, der zur gekrümmten Achse (B) hin weist.

5. Anordnung gemäß einem der Ansprüche 1 bis 4, wobei die Dichtungshalterung (60) einen Ring aufweist, der mit der Längsachse (A) koaxial ist, optional wobei die gekrümmte Achse (B) eine sich kreisrund erstreckende Achse ist.

6. Hydraulische Kupplung (26, 28), umfassend:
eine weibliche hydraulische Kupplungskomponente (28) und eine männliche hydraulische Kupplungskomponente (26), die mit der weiblichen hydraulischen Kupplungskomponente (28) in Eingriff ist; und
die Anordnung von Anspruch 1;
wobei die weibliche hydraulische Kupplungskomponente (28) umfasst:
ein Gehäuse (38), das eine Öffnung hat, die dazu konfiguriert ist, die männliche hydraulische Kupplungskomponente (26) aufzunehmen, und einen Strömungshohlraum (70) hat, der mit der Öffnung in Fluidverbindung bringbar ist und sich entlang der Längsachse (A) erstreckt, wobei das Gehäuse (38) ferner einen Sitz (74) umfasst, der einen Teil des Strömungshohlraums (70) umgibt;
die Dichtungshalterung (60), die in der Öffnung ist, wobei die radial nach innen weisende Oberfläche der Dichtungshalterung (60) dazu konfiguriert ist, eine radial nach außen weisende Oberfläche der männlichen hydraulischen Kupplungskomponente (26) aufzunehmen; und
das Dichtungselement (66);
wobei die hydraulische Kupplung (26, 28) ferner umfasst:
ein Ventilelement (72), das innerhalb des Strömungshohlraums (70) beweglich ist, wobei das Dichtungselement (72) zwischen einer geschlossenen Position und einer offenen Position beweglich ist, wenn das Ventilelement (72) in der geschlossenen Position mit dem Ventilsitz (74) in Eingriff ist, um eine Strömung durch den Strömungshohlraum (70) zu verhindern, und wenn das Ventilelement (72) in der offenen Position von dem Ventilsitz (74) beabstandet ist, um eine Strömung durch den Strömungshohlraum (70) zuzulassen.

7. Hydraulische Kupplung (26, 28) gemäß Anspruch 6, wobei das Dichtungselement (66) dazu konfiguriert ist, eine Strömung aus dem Strömungshohlraum (70) aufzunehmen, und wobei sich das Dichtungselement (66) ausdehnt, nachdem es die Strömung aus dem Strömungshohlraum (70) aufgenommen hat.

8. Hydraulische Kupplung (26, 28) gemäß einem der Ansprüche 6 bis 7, wobei das Dichtungselement (66) eine C-Ring-Dichtung umfasst, die in der ersten Richtung offen ist, wobei die C-Ring-Dichtung die konvexe Fläche (122) aufweist und die konvexe Fläche (122) in die zweite Richtung weist, damit die konvexe Fläche (122) mit dem axial weisenden konkaven Teil (64) in Eingriff kommt, optional wobei der axial weisende konkave Teil (64) eine symmetrische Konkavität um die Längsachse (A) herum ausbildet, und wobei die symmetrische Konkavität dazu konfiguriert ist, das Dichtungselement (66) konzentrisch aufzunehmen, optional wobei der Radius des axial weisenden konkaven Teils (64) relativ zur gekrümmten Achse (B) ist, optional wobei der Radius der konvexen Fläche (122) des Dichtungselements (66) relativ zur gekrümmten Achse (B) ist.

9. Hydraulische Kupplung (26, 28) gemäß einem der Ansprüche 6 bis 8, wobei der axial weisende konkave Teil (64) einen C-förmigen Querschnitt hat, der zur gekrümmten Achse (B) hin weist.

10. Hydraulische Kupplung (26, 28) gemäß einem der Ansprüche 6 bis 9, wobei die Dichtungshalterung (60) einen Ring aufweist, der mit der Längsachse (A) koaxial ist, optional wobei die gekrümmte Achse (B) eine sich kreisrund erstreckende Achse ist.

11. Hydraulische Kupplung (26, 28) gemäß einem der Ansprüche 6 bis 10, wobei das Dichtungselement (66) dazu konfiguriert ist, eine Strömung aus dem Strömungshohlraum (70) aufzunehmen, wenn das Dichtungselement (72) von der männlichen hydraulischen Kupplungskomponente (26) geöffnet wird.

12. Anordnung oder hydraulische Kupplung (26, 28) gemäß einem der Ansprüche 1 bis 11, wobei eine Tiefe D des axial weisenden konkaven Teils (64) entlang der Längsachse (A) zwischen 10% und 25% eines Radius des axial weisenden konkaven Teils (64) relativ zur gekrümmten Achse B ist, optional die Tiefe in einem Bereich von 0,178 mm bis 0,381 mm (0,007 Zoll bis 0,015 Zoll) ist, optional wobei das axiale Ende des Dichtungselements (66) mit einem Teil der axial weisenden Oberfläche (62) in Eingriff ist, der den axial weisenden konkaven Teil (64) definiert, optional wobei ein Radius des axial weisenden konkaven Teils (64) zwischen ungefähr 3% und ungefähr 10% größer als ein Radius des Dichtungselements (66) relativ zur gekrümmten Achse (B) ist, um es dem Dichtungselement (66) zu ermöglichen, sich relativ zur gekrümmten Achse (B) radial nach außen auszudehnen, optional wobei der Radius des axial weisenden konkaven Teils (64) zwischen ungefähr 4% und ungefähr 8% größer als der Radius des Dichtungselements (66) relativ zur gekrümmten Achse (B) ist, optional wobei ein Winkel (θ_{B}), der von dem axial weisenden konkaven Teil (64) mit der gekrümmten Achse (B) eingeschlossen wird, in einem Bereich von 60° bis 120° ist, optional der Winkel (θ_{B}) in einem Bereich von 60° bis 90° ist.

13. Hydraulische Kupplung (26, 28) gemäß einem der Ansprüche 6 bis 12, wobei der gesamte axial weisende konkave Teil (64) radial zwischen einem radial inneren Teil des Dichtungselements (66) und einem radial äußeren Teil des Dichtungselements (66) relativ zur Längsachse (A) ist, optional wobei das Dichtungselement (66) aus Metall ist.

14. Hydraulische Kupplung (26, 28) gemäß einem der Ansprüche 6 bis 13, wobei bei einer Druckbeaufschlagung des Dichtungselements (66) der radial äußere Teil des Dichtungselements (66) gegen einen Teil der radial nach innen weisenden Oberfläche (120/205) des Gehäuses (38) in dichtenden Eingriff kommt, und der radial innere Teil des Dichtungselements (66) gegen einen Teil einer radial nach außen weisenden Oberfläche (42/207) des männlichen hydraulischen Kupplungselements (26) in dichtenden Eingriff kommt; und
wobei der axial weisende konkave Teil (64) insgesamt entlang der Längsachse (A) gegen den Teil der radial nach innen weisenden Oberfläche (120/205) des Gehäuses (38) und einen Teil der radial nach außen weisenden Oberfläche (42/207) der männlichen hydraulischen Kupplungskomponente (26) axial versetzt ist.

## Revendications

1. Ensemble pour un composant hydraulique (28), l'ensemble comprenant :
un élément de retenue de joint d'étanchéité (60) comprenant :
une surface orientée radialement vers l'intérieur s'étendant autour d'un axe longitudinal (A) et s'étendant le long de l'axe longitudinal (A) ;
une surface orientée axialement (62) s'étendant radialement vers l'extérieur depuis la surface orientée radialement vers l'intérieur, la surface orientée axialement (62) étant orientée dans une première direction le long de l'axe longitudinal (A) ; et
une partie concave orientée axialement (64) formée dans la surface orientée axialement (62), la partie concave orientée axialement (64) étant orientée dans la première direction et configurée pour recevoir une face convexe (122) d'un élément d'étanchéité (66), où la partie concave orientée axialement (64) s'étend le long d'un axe incurvé (B), l'axe incurvé (B) étant centré sur l'axe longitudinal (A) et circonscrivant ce dernier ;
l'ensemble comprenant en outre :
l'élément d'étanchéité (66), où la face convexe (122) est placé dans la partie concave orientée axialement (64), et où la face convexe (122) forme une extrémité axiale de l'élément d'étanchéité (66) ;
dans lequel, lorsque l'élément d'étanchéité (66) est sous pression,
l'élément d'étanchéité (66) est engagé avec la partie concave orientée axialement (64) de la surface orientée axialement (62) de l'élément de retenue de joint d'étanchéité (60) pour empêcher l'élément d'étanchéité (66) de se déplacer dans une deuxième direction opposée à la première direction ;
des parties radialement extérieure et radialement intérieure de l'élément d'étanchéité (66) se dilatent radialement, par rapport à l'axe longitudinal (A) ; et
la surface orientée axialement (62) de l'élément de retenue de joint d'étanchéité (60) limite partiellement la dilatation pour réduire la contrainte de l'élément d'étanchéité (66) et la surface orientée axialement (62) de l'élément de retenue de joint d'étanchéité (60) renforce une courbure de l'élément d'étanchéité (66), empêchant ainsi un aplatissement de l'élément d'étanchéité (66) pour améliorer l'efficacité d'étanchéité de l'élément d'étanchéité (66) ;
dans lequel la face convexe (122) est opposée à la partie concave orientée axialement (64) pour permettre à la face convexe (122) et à la partie concave orientée axialement (64) de s'engager l'une avec l'autre ; et
dans lequel la face convexe (122) circonscrit l'axe incurvé (B) avec un rayon inférieur à un rayon correspondant de la partie concave orientée axialement (64) pour permettre à la face convexe (122) de se dilater radialement vers l'extérieur depuis l'axe incurvé (B) après avoir buté contre une partie de la surface orientée axialement (62) qui définit la partie concave orientée axialement (64).

2. Ensemble de la revendication 1, dans lequel l'élément d'étanchéité (66) comporte un joint d'étanchéité annulaire en C qui est ouvert dans la première direction, où le joint d'étanchéité annulaire en C comporte la face convexe (122).

3. Ensemble de l'une quelconque des revendications 1 et 2, dans lequel la partie concave orientée axialement (64) forme une concavité symétrique autour de l'axe longitudinal (A), où la concavité symétrique est configurée pour recevoir de manière concentrique l'élément d'étanchéité (66).

4. Ensemble de l'une quelconque des revendications 1 à 3, dans lequel la partie concave orientée axialement (64) a une section transversale en forme de C orientée vers l'axe incurvé (B).

5. Ensemble de l'une quelconque des revendications 1 à 4, dans lequel l'élément de retenue de joint d'étanchéité (60) comporte un anneau qui est coaxial à l'axe longitudinal (A), où éventuellement l'axe incurvé (B) est un axe circulaire.

6. Accouplement hydraulique (26, 28) comprenant :
un composant d'accouplement hydraulique femelle (28) et un composant d'accouplement hydraulique mâle (26) engagé avec le composant d'accouplement hydraulique femelle (28) ; et
l'ensemble de la revendication 1 ;
dans lequel le composant d'accouplement hydraulique femelle (28) comprend :
un boîtier (38) ayant une ouverture configurée pour recevoir le composant d'accouplement hydraulique mâle (26), et ayant une cavité d'écoulement (70) pouvant être en communication fluidique avec l'ouverture et s'étendant le long de l'axe longitudinal (A), où le boîtier (38) comprend en outre un siège (74) entourant une partie de la cavité d'écoulement (70) ;
l'élément de retenue de joint d'étanchéité (60), qui se trouve dans l'ouverture, la surface orientée radialement vers l'intérieur de l'élément de retenue de joint d'étanchéité (60) étant configurée pour recevoir une surface orientée radialement vers l'extérieur du composant d'accouplement hydraulique mâle (26) ; et
l'élément d'étanchéité (66) ;
l'accouplement hydraulique (26, 28) comprenant en outre :
un élément de soupape (72) mobile dans la cavité d'écoulement (70), l'élément de soupape (72) étant mobile entre une position fermée et une position ouverte, lorsqu'il est en position fermée, l'élément de soupape (72) est engagé avec le siège de soupape (74) pour empêcher l'écoulement à travers la cavité d'écoulement (70) et, lorsqu'il est en position ouverte, l'élément de soupape (72) est espacé du siège de soupape (74) pour permettre à un fluide de s'écouler à travers la cavité d'écoulement (70).

7. Accouplement hydraulique (26, 28) de la revendication 6, dans lequel l'élément d'étanchéité (66) est configuré pour recevoir un écoulement à partir de la cavité d'écoulement (70), et dans lequel l'élément d'étanchéité (66) se dilate lors de la réception d'un écoulement à partir de la cavité d'écoulement (70).

8. Accouplement hydraulique (26, 28) de l'une quelconque des revendications 6 et 7, dans lequel l'élément d'étanchéité (66) comporte un joint d'étanchéité annulaire en C qui est ouvert dans la première direction, où le joint d'étanchéité annulaire en C comporte la face convexe (122) et la face convexe (122) est orientée dans la deuxième direction pour que la face convexe (122) s'engage avec la partie concave orientée axialement (64), où éventuellement la partie concave orientée axialement (64) forme une concavité symétrique autour de l'axe longitudinal (A), et où la concavité symétrique est configurée pour recevoir de manière concentrique l'élément d'étanchéité (66), où éventuellement le rayon de la partie concave orientée axialement (64) est relatif à l'axe incurvé (B), où éventuellement le rayon de la face convexe (122) de l'élément d'étanchéité (66) est relatif à l'axe incurvé (B).

9. Accouplement hydraulique (26, 28) de l'une quelconque des revendications 6 à 8, dans lequel la partie concave orientée axialement (64) a une section transversale en forme de C orientée vers l'axe incurvé (B).

10. Accouplement hydraulique (26, 28) de l'une quelconque des revendications 6 à 9, dans lequel l'élément de retenue de joint d'étanchéité (60) comporte un anneau qui est coaxial à l'axe longitudinal (A), où éventuellement l'axe incurvé (B) est un axe circulaire.

11. Accouplement hydraulique (26, 28) de l'une quelconque des revendications 6 à 10, dans lequel l'élément d'étanchéité (66) est configuré pour recevoir un écoulement à partir de la cavité d'écoulement (70) lorsque l'élément de soupape (72) est ouvert par le composant d'accouplement hydraulique mâle (26).

12. Ensemble ou accouplement hydraulique (26, 28) de l'une quelconque des revendications 1 à 11, dans lequel une profondeur D de la partie concave orientée axialement (64), le long de l'axe longitudinal (A), est comprise entre 10% et 25% d'un rayon de la partie concave orientée axialement (64) par rapport à l'axe incurvé B, éventuellement la profondeur est comprise entre 0,178 mm et 0,381 mm (0,007"et 0,015"), où éventuellement l'extrémité axiale de l'élément d'étanchéité (66) est engagée avec une partie de la surface orientée axialement (62) qui définit la partie concave orientée axialement (64), où éventuellement un rayon de la partie concave orientée axialement (64) est supérieur d'environ 3% à environ 10% à un rayon de l'élément d'étanchéité (66) par rapport à l'axe incurvé (B) pour permettre à l'élément d'étanchéité (66) de se dilater radialement vers l'extérieur par rapport à l'axe incurvé (B), où éventuellement le rayon de la partie concave orientée axialement (64) est supérieur d'environ 4% à environ 8% au rayon de l'élément d'étanchéité (66) par rapport à l'axe incurvé (B), où éventuellement un angle (θ_{B}) formé par la partie concave orientée axialement (64) par rapport à l'axe incurvé (B) est compris entre 60° et 120°, éventuellement l'angle (θ_{B}) est compris entre 60° et 90°.

13. Accouplement hydraulique (26, 28) de l'une quelconque des revendications 6 à 12, dans lequel la totalité de la partie concave orientée axialement (64) se trouve radialement entre une partie radialement intérieure de l'élément d'étanchéité (66) et une partie radialement extérieure de l'élément d'étanchéité (66), par rapport à l'axe longitudinal (A), où éventuellement l'élément d'étanchéité (66) est métallique.

14. Accouplement hydraulique (26, 28) de l'une quelconque des revendications 6 à 13, dans lequel, lorsque l'élément d'étanchéité (66) est mis sous pression, la partie radialement extérieure de l'élément d'étanchéité (66) assure l'étanchéité contre une partie d'une surface orientée radialement vers l'intérieur (120/205) du boîtier (38), et la partie radialement intérieure de l'élément d'étanchéité (66) assure l'étanchéité contre une partie d'une surface orientée radialement vers l'extérieur (42/207) du composant d'accouplement hydraulique mâle (26) ; et
dans lequel la partie concave orientée axialement (64) est entièrement décalée axialement le long de l'axe longitudinal (A) par rapport à la partie de la surface orientée radialement vers l'intérieur (120/205) du boîtier (38) et une partie de la surface orientée radialement vers l'extérieur (42/207) du composant d'accouplement hydraulique mâle (26).
